# EUROPEAN PATENT APPLICATION

(11) **EP 4 585 052 A1**
(43) Date of publication of application: **16.07.2025**
(21) Application number: 23863243.4
(22) Date of filing: 07.09.2023
(51) Int. Cl.: A23L 27/00, A23L 27/20, A23F 5/24, A23L 23/00

(54) **OIL/FAT SENSATION ENHANCING AGENT**

(30) Priority: 08.09.2022 JP 2022142716
(71) Applicant: AJINOMOTO CO., INC., Chuo-ku Tokyo 104-8315 (JP)
(72) Inventor: SAKAMOTO, Kazuhiro, Kawasaki-shi, Kanagawa 210-8681 (JP); KITAJIMA, Seiji, Kawasaki-shi, Kanagawa 210-8681 (JP); TAJIMA, Takaho, Kawasaki-shi, Kanagawa 210-8681 (JP)
(74) Representative: Strehl & Partner mbB
(86) International application number: PCT/JP2023/032675
(87) International publication number: WO 2024/053705

(57) **Abstract**

The present invention provides an oil-and-fat feel enhancer for foods and beverages containing fats and oils, which contains at least one selected from the group consisting of 2,4,5-trimethylthiazole, 2,3,5-trimethylpyrazine, and 4-ethylguaiacol as an active ingredient, and is widely utilizable and easily produced.

## Description

### [Technical Field]

The present invention relates to an oil-and-fat feel enhancer that can be conveniently applied to foods and drinks and the like with reduced fat. In addition, the present invention relates to foods and drinks with an enhanced oil-and-fat feel, a production method thereof, and further, a method for enhancing an oil-and-fat feel.

### [Background Art]

In recent years, the need for low-fat, low-calorie foods has increased due to the prevention of metabolic syndrome and and lifestyle-related diseases and increasing interest in health, as well as the recent rise in the price of oils and fats. However, when the amount of oil-and-fat is decreased, a problem occurs that the texture derived from fats and oils (oil-and-fat feel) is lost. Therefore, efforts are being made to develop technologies that can provide foods with an oil-and-fat feel while maintaining low fat and low calories by reducing the amount of fats and oils, and that can enhance the deliciousness of fats and oils in foods with low amounts of fats and oils. However, there are few technologies or materials that can compensate for the oil-and-fat feel, and it has been difficult to greatly enhance the oil-and-fat feel without using fats and oils.

On the other hand, pure and fresh fats and oils have neither taste nor odor, and it is not known that flavor components relating to odor are involved in the oil-and-fat feel. For example, the flavoring ingredients 2,3,5-trimethylpyrazine and 4-ethylguaiacol are known to have the effects of enhancing the coffee flavor of milk-flavored coffee beverages (Patent Literature 1), imparting a rich flavor to foods and beverages (Patent Literature 2), imparting an addictive and unique aroma to sesame-containing seasonings and the like (Patent Literature 3), and imparting a milky flavor to milk beverages even with low sweetness while suppressing the milky odor (Patent Literature 4). However, it is not known that these flavor components supplement or enhance the oil-and-fat feel.

### [Citation List]

### [Patent Literature]

[Patent Literature 1]
   JP 2021-7373 A
[Patent Literature 2]
   JP 11-313635 A
[Patent Literature 3]
   JP 2019-208440 A
[Patent Literature 4]
   JP 2021-119762 A

### [Summary of Invention]

### [Technical Problem]

The problem of the present invention is to provide an oil-and-fat feel enhancer that can enhance the oil-and-fat feel of foods and beverages, particularly low-fat foods and beverages, or can reduce the amount of fats and oils used in foods and beverages.

### [Solution to Problem]

The present inventors have conducted intensive studies in an attempt to solve the above-mentioned problem and unexpectedly found that the oily-and-fat feel can be enhanced by simply adding flavor components such as 2,4,5-trimethylthiazole, 2,3,5-trimethylpyrazine, and 4-ethylguaiacol, either alone or in combination, to foods containing fats and oils, at levels not more than the threshold value of each component, and that this makes it possible to reduce the amount of fats and oils used in foods and beverages. They have conducted further studies and completed the present invention.

Accordingly, the present invention provides the following.
[1] An oil-and-fat feel enhancer comprising at least one selected from the group consisting of (1) 2,4,5-trimethylthiazole, (2) 2,3,5-trimethylpyrazine, and (3) 4-ethylguaiacol as an active ingredient.
[2] The oil-and-fat feel enhancer of [1], comprising at least two selected from the group consisting of (1) 2,4,5-trimethylthiazole, (2) 2,3,5-trimethylpyrazine, and (3) 4-ethylguaiacol as active ingredients.
[3] The oil-and-fat feel enhancer of [1], comprising (1) 2,4,5-trimethylthiazole, (2) 2,3,5-trimethylpyrazine, and (3) 4-ethylguaiacol as active ingredients.
[4] The oil-and-fat feel enhancer of any of [1] to [3], which is added to foods and beverages containing fats and oils.
[5] The oil-and-fat feel enhancer of any of [1] to [4], which is added such that the concentrations of the active ingredients are (1) 0.002 to 90 ppb by weight, (2) 0.002 to 98 ppb by weight, and (3) 0.002 to 9 ppb by weight, at the time of eating.
[6] A method for producing a food or beverage comprising fat or oil, comprising a step of adding at least one selected from the group consisting of (1) 2,4,5-trimethylthiazole, (2) 2,3,5-trimethylpyrazine, and (3) 4-ethylguaiacol at an addition concentration of (1) 0.002 to 90 ppb by weight, (2) 0.002 to 98 ppb by weight, and (3) 0.002 to 9 ppb by weight, respectively, with respect to the total weight of the food and beverage.
[7] The production method of [6], comprising a step of adding at least two selected from the group consisting of (1) 2,4,5-trimethylthiazole, (2) 2,3,5-trimethylpyrazine, and (3) 4-ethylguaiacol.
[8] The production method of [6], comprising a step of adding (1) 2,4,5-trimethylthiazole, (2) 2,3,5-trimethylpyrazine, and (3) 4-ethylguaiacol.
[9] The production method of any of [6] to [8], wherein the food or beverage comprising fat or oil is a food or beverage with an enhanced oil-and-fat feel.
   [9-1] The production method of [9], wherein the food or beverage comprising fat or oil is free of an off-flavor.
[10] A method for enhancing an oil-and-fat feel of a food or beverage comprising fat or oil, comprising adding at least one selected from the group consisting of (1) 2,4,5-trimethylthiazole, (2) 2,3,5-trimethylpyrazine, and (3) 4-ethylguaiacol.
[11] The method of [10], comprising a step of adding at least two selected from the group consisting of (1) 2,4,5-trimethylthiazole, (2) 2,3,5-trimethylpyrazine, and (3) 4-ethylguaiacol.
[12] The method of [10], comprising a step of adding (1) 2,4,5-trimethylthiazole, (2) 2,3,5-trimethylpyrazine, and (3) 4-ethylguaiacol.
[13] The method of any of [10] to [12], wherein the addition concentrations are (1) 0.002 to 90 ppb by weight, (2) 0.002 to 98 ppb by weight, and (3) 0.002 to 9 ppb by weight, respectively, with respect to the total weight of the food and beverage.
[14] A food or beverage comprising fat or oil, comprising at least one selected from the group consisting of (1) 2,4,5-trimethylthiazole, (2) 2,3,5-trimethylpyrazine, and (3) 4-ethylguaiacol, wherein contents thereof are 0.001% by weight or more and less than 100% by weight for the fat or oil, 0.002 to 90 ppb by weight for (1), 0.002 to 98 ppb by weight for (2), and 0.002 to 9 ppb by weight for (3), each with respect to the total weight of the food and beverage.
[15] The food or beverage of [14], comprising at least two selected from the group consisting of (1) 2,4,5-trimethylthiazole, (2) 2,3,5-trimethylpyrazine, and (3) 4-ethylguaiacol.
[16] The food or beverage of [14], comprising (1) 2,4,5-trimethylthiazole, (2) 2,3,5-trimethylpyrazine, and (3) 4-ethylguaiacol.

### [Advantageous Effects of Invention]

According to the present invention, an oil-and-fat feel of low-fat foods and beverages can be easily supplemented and foods and beverages with high preference can be provided.

According to the present invention, low-fat, low-calorie foods with reduced amounts of fats and oils can be conveniently produced.

According to the present invention, an oil-and-fat feel of low-fat foods and beverages can be enhanced without imparting an off-flavor.

### [Description of Embodiments]

The present invention provides an oil-and-fat feel enhancer containing at least one selected from the group consisting of (1) 2,4,5-trimethylthiazole, (2) 2,3,5-trimethylpyrazine, and (3) 4-ethylguaiacol as an active ingredient (hereinafter sometimes to be simply referred to as the active ingredient) (hereinafter sometimes to be abbreviated as the oil-and-fat feel enhancer of the present invention).

While pure and fresh fats and oils have neither taste nor odor, when added to food, they modify the taste and odor. Thus, the "oil-and-fat feel" means oral sensations including taste, smell, texture, and the like felt in foods and beverages containing fats and oils. That is, in the present invention, the "oil-and-fat feel" means oral sensations such as taste, smell, texture, and the like imparted by the presence of fats and oils in food, which can also be expressed as lost sensations recognized when fats and oils in the foods are reduced. Specifically, it means fat and oil-like richness, thickness, rich taste, creaminess, milkiness, lardiness, mouth-coating and mouth-watering sensations, especially thickness, rich taste, creaminess, lardiness, mouth-coating and mouth-watering sensations, and it is a sensation including one or more of these, or a comprehensive sensation that encompasses these.

In the present invention, "enhancing oil-and-fat feel" is a concept that includes further improving the oil-and-fat feel of a food or drink containing fats and oils, and also compensating for a reduced oil-and-fat feel to improve same to a normal level or to an even higher level of the oil-and-fat feel. For example, an oil-and-fat feel is defined to have been enhanced when the oil-and-fat feel of a food or drink containing a generally amount of fats and oils is improved by applying the enhancer of the present invention, and when a food or drink containing half the amount of general fats and oils can afford an oil-and-fat feel equal to or greater than that of a food or drink containing the full amount thereof.

2,4,5-Trimethylthiazole (CAS No.:13623-11-5), 2,3,5-trimethylpyrazine (CAS No.:17466-55-1), and 4-ethylguaiacol (CAS No.:2785-89-9) that are the active ingredients contained in the oil-and-fat feel enhancer of the present invention are not particularly limited as long as they are used as flavors. Synthetic products, extracts extracted from animals and plants by methods known per se, or commercially available products can be used. In the present invention, the active ingredient means an ingredient that enhances the oil-and-fat feel in foods and beverages.

In the present invention, the active ingredient may be used alone or in combination of two or more kinds thereof. From the aspect of clarity of the oil-and-fat feel enhancing effect, the combinations of two kinds of 2,4,5-trimethylthiazole and 2,3,5-trimethylpyrazine, 2,4,5-trimethylthiazole and 4-ethylguaiacol, and 2,3,5-trimethylpyrazine and 4-ethylguaiacol are preferred, and the combination of three kinds of 2,4,5-trimethylthiazole, 2,3,5-trimethylpyrazine, and 4-ethylguaiacol is more preferred.

The weight ratio of the content (concentration) of the active ingredients in the enhancer of the present invention is as follows:
weight ratio of the content (concentration) of 2,4,5-trimethylthiazole and 2,3,5-trimethylpyrazine; generally 1:0.00002 to 50000, preferably 1:0.00004 to 30000, more preferably 1:0.00007 to 20000, further preferably 1:0.0001 to 10000, particularly preferably 1:0.0002 to 8000,
weight ratio of the content (concentration) of 2,4,5-trimethylthiazole and 4-ethylguaiacol; generally 1:0.00002 to 4500, preferably 1:0.00003 to 3000, more preferably 1:0.00007 to 1500, further preferably 1:0.0001 to 750, particularly preferably 1:0.0002 to 500,
weight ratio of the content (concentration) of 2,3,5-trimethylpyrazine and 4-ethylguaiacol; generally 1:0.00002 to 4500, preferably 1:0.00003 to 3000, more preferably 1:0.00005 to 1500, further preferably 1:0.00009 to 750, particularly preferably 1:0.0001 to 500,
weight ratio of the content (concentration) of 2,4,5-trimethylthiazole, 2,3,5-trimethylpyrazine, and 4-ethylguaiacol; generally 1:0.00002 to 50000:0.00002 to 4500, preferably 1:0.00004 to 30000:0.00003 to 3000, more preferably 1:0.00007 to 20000:0.00007 to 1500, further preferably 1:0001 to 10000:0.0001 to 750, particularly preferably 1:0.0002 to 8000:0.0002 to 500.

The enhancer of the present invention is used for addition to foods and beverages. Among them, from the aspect of enhancing the oil-and-fat feel, foods and beverages containing fats and oils (foods and beverages containing fats and oils) are preferred.

The fats and oils contained are not particularly limited as long as they can be added to normal foods (edible fats and oils). For example, plant-derived fats and oils that are liquid at ordinary temperature, such as rapeseed oil, soybean oil, safflower oil, corn oil, sesame oil, palm oil, coconut oil, olive oil, rice oil, peanut oil, sunflower oil, canola oil, salad oil and the like, plant-derived fats and oils that are solid at ordinary temperature such as cacao butter, peanut butter, palm oil, coconut oil, hydrogenated oil (margarine, shortening, etc.) and the like; and animal-derived fats and oils that are liquid at ordinary temperature such as fish oil (whale oil, shark oil, liver oil), pupa oil and the like, and animal-derived fats and oils that are solid at ordinary temperature such as lard (pork fat), het (beef tallow), chicken fat, rabbit fat, mutton fat, horse fat, milk fat (butter, ghee, etc.), and whale oil can be mentioned. In addition, a transesterified oil obtained by transesterifying the above-mentioned edible fats and oils, a hydrogenated oil obtained by hydrogenating the above-mentioned edible fats and oils and the like can also be used. These fats and oils may be contained alone in foods and beverages or two or more kinds thereof may be contained.

The content of fats and oils in the fats and oils-containing foods and beverages to which the enhancer of the present invention is applied is, from the aspect of clarity of the oil-and-fat feel enhancing effect, generally 0.001% by weight or more, preferably 0.01% by weight or more, more preferably 0.1% by weight or more, and generally less than 100% by weight, with respect to the total amount of the foods and beverages. Specifically, the content of fats and oils in the fats and oils-containing foods and beverages is generally 0.001% by weight or more and less than 100% by weight, preferably 0.01 to 80% by weight, more preferably 0.1 to 60% by weight, further preferably 0.4 to 40% by weight, particularly preferably 1 to 20% by weight, most preferably 2 to 10% by weight, with respect to the total amount of the foods and beverages.

From the aspect of efficiently enhancing the oil-and-fat feel, the enhancer of the present invention is used, for example, in the following ratios per 100 parts by weight of fats and oils, for addition to foods and beverages containing fats and oils:
2,4,5-trimethylthiazole; generally 0.3×10⁻⁷ to 13×10⁻⁴ parts by weight, preferably 0.5×10⁻⁷ to 11×10⁻⁴ parts by weight, more preferably 0.8×10⁻⁷ to 10x10⁻⁴ parts by weight, further preferably 1×10⁻⁷ to 8×10⁻⁴ parts by weight, particularly preferably 1.4×10⁻⁷ to 7×10⁻⁴ parts by weight,
2,3,5-trimethylpyrazine; generally 0.3×10⁻⁷ to 13×10⁻⁴ parts by weight, preferably 0.5×10⁻⁷ to 13×10⁻⁴ parts by weight, more preferably 0.8×10⁻⁷ to 12.5×10⁻⁴ parts by weight, further preferably 1×10⁻⁷ to 12×10⁻⁴ parts by weight, particularly preferably 1.4×10⁻⁷ to 11.2×10⁻⁴ parts by weight,
4-ethylguaiacol; generally 0.3×10⁻⁷ to 13×10⁻⁵ parts by weight, preferably 0.5×10⁻⁷ to 11×10⁻⁵ parts by weight, more preferably 0.8×10⁻⁷ to 10×10⁻⁵ parts by weight, further preferably 1×10⁻⁷ to 8×10⁻⁵ parts by weight, particularly preferably 1.4×10⁻⁷ to 7×10⁻⁵ parts by weight.

The content of fats and oils originally contained in foods and beverages can be based on, for example, the triacylglycerol equivalent or lipid content of each food or beverage described in the 2020 edition (8th revision) of the Standard Tables of Food Composition in Japan.

In another embodiment, from the aspect of efficiently enhancing the oil-and-fat feel of foods containing high concentrations of fats and oils, the enhancer of the present invention may be used, for example, in the following ratios per 100 parts by weight of fats and oils, for addition to foods and beverages containing fats and oils:
2,4,5-trimethylthiazole; generally 0.3×10⁻⁹ to 13×10⁻⁴ parts by weight, preferably 0.5×10⁻⁹ to 11×10⁻⁴ parts by weight, more preferably 0.8×10⁻⁹ to 10×10⁻⁴ parts by weight, further preferably 1×10⁻⁹ to 8×10⁻⁴ parts by weight, particularly preferably 1.4×10⁻⁹ to 7×10⁻⁴ parts by weight,
2,3,5-trimethylpyrazine; generally 0.3×10⁻⁹ to 13×10⁻⁴ parts by weight, preferably 0.5×10⁻⁹ to 13×10⁻⁴ parts by weight, more preferably 0.8×10⁻⁹ to 12.5×10⁻⁴ parts by weight, further preferably 1×10⁻⁹ to 12×10⁻⁴ parts by weight, particularly preferably 1.4x10⁻⁹ to 11.2×10⁻⁴ parts by weight,
4-ethylguaiacol; generally 0.3×10⁻⁹ to 13×10⁻⁵ parts by weight, preferably 0.5×10⁻⁹ to 11×10⁻⁵ parts by weight, more preferably 0.8×10⁻⁹ to 10×10⁻⁵ parts by weight, further preferably 1×10⁻⁹ to 8×10⁻⁵ parts by weight, particularly preferably 1.4×10⁻⁹ to 7×10⁻⁵ parts by weight.

Foods and beverages containing fats and oils are not particularly limited as long as they contain fats and oils and the active ingredient of the present invention can be applied to. For example, foods and beverages and fats and oils per se can be mentioned.

In the present invention, the foods and beverages mean foodstuffs and drinks, and the foodstuffs also include seasoning.

For example, foodstuffs include soups such as consomme soup, potage soup, cream soup, curry, stew, and tom yum goong, and instant powdered foods thereof; stir-fried foods such as fried rice, stir-fried vegetables, fried noodles, twice-cooked pork, mapo tofu, green pepper and pork/beef stir-fry, dried roasted shrimp, stir-fried meat and vegetables, nasi goreng, mie goreng, fried rice vermicelli, scrambled eggs, kinpira burdock, and stir-fried meat; baked foods such as grilled fish, yakitori, broiled eel, roasted pork, grilled ginger, steak, grilled meat, sukiyaki, hamburger steak, meatballs, basso, grilled vegetables, grilled rice balls, rice crackers, various baked confectioneries, pizza, and bread; fried foods such as fried chicken, fries, deep-fried foods, and tempura, and their batters and breadcrumbs; noodles such as udon, hiyamugi, somen, buckwheat, Chinese noodles, pasta, macaroni, rice vermicelli, vermicelli, and wonton (including instant noodles such as fried noodles and non-fried noodles); processed meat foods such as ham, sausage, processed formed meat, and processed products thereof (e.g., foods and beverages for cooking in a microwave oven, retort foods, instant foods, frozen foods, dried foods, etc.); desserts such as jellies, bavarois, and yogurt; processed seafood foods such as kamaboko and chikuwa; dairy products such as cheese; dairy products such as butter, cream, fermented milk, and milk powder; dairy substitutes such as margarine, fat spreads, and coffee whitener; frozen desserts such as ice cream, ice milk, lacto ice cream, sorbet, and frozen desserts; confectioneries such as gummy candies, candies, chewing gum, tablet confectioneries, and potato chips; nutritional bars; and processed products thereof (e.g., foods and beverages for cooking in a microwave oven, instant foods, frozen foods, dried foods, etc.).

Examples of seasonings include liquid seasonings such as dressings (e.g., Japanese dressing, creamy dressing, Caesar dressing, French dressing, etc.), ketchup, tare, and sauces (e.g., steak sauce, ginger sauce, pizza sauce, tartar sauce, yakiniku sauce, demi-glace sauce, sambal sauce, etc.); solid seasonings such as curry powder and curry roux; and semi-solid seasonings such as mayonnaise.

In addition, the food is not limited to general food, but also includes so-called health foods and medical foods such as nutrition aid foods (supplements), foods with nutrient function claims, and foods for specified health uses. For example, the foods exemplified above may be provided as general foods, or as health foods or medical foods.

Examples of beverages include coffee beverages, coffee-containing soft drinks; tea beverages such as black tea beverages and herbal tea beverages; beverages such as milk beverages, fermented milk beverages, lactic acid bacteria beverages, soft drinks, fruit juice beverages, vegetable beverages, vegetable and fruit beverages, sports drinks, jelly drinks, and powdered beverages; alcoholic beverages; and nutritional drinks.

The concentration of the oil-and-fat feel enhancer of the present invention at the time of eating may be changed as appropriate depending on the type and content of fats and oils and the type of foods and beverages. The enhancer is added to foods and beverages in the following amounts with respect to the total weight of the foods and beverages:
2,4,5-trimethylthiazole; generally 0.002 to 90 ppb by weight, preferably 0.003 to 80 ppb by weight, more preferably 0.005 to 70 ppb by weight, further preferably 0.008 to 60 ppb by weight, particularly preferably 0.01 to 50 ppb by weight,
2,3,5-trimethylpyrazine; generally 0.002 to 98 ppb by weight, preferably 0.003 to 95 ppb by weight, more preferably 0.005 to 90 ppb by weight, further preferably 0.008 to 85 ppb by weight, particularly preferably 0.01 to 80 ppb by weight,
4-ethylguaiacol; generally 0.002 to 9 ppb by weight, preferably 0.003 to 8 ppb by weight, more preferably 0.005 to 7 ppb by weight, further preferably 0.008 to 6 ppb by weight, particularly preferably 0.01 to 5 ppb by weight.

More specifically, when the content of fats and oils in a food or beverage is generally 0.001% by weight or more, preferably 0.01% by weight or more, more preferably 0.1% by weight or more, and generally less than 100% by weight, the oil-and-fat feel enhancer of the present invention is added to the food or beverage such that the concentration of the enhancer at the time of eating is as follows, with respect to the total weight of the foods and beverages:
2,4,5-trimethylthiazole; generally 0.002 to 90 ppb by weight, preferably 0.003 to 80 ppb by weight, more preferably 0.005 to 70 ppb by weight, further preferably 0.008 to 60 ppb by weight, particularly preferably 0.01 to 50 ppb by weight,
2,3,5-trimethylpyrazine; generally 0.002 to 98 ppb by weight, preferably 0.003 to 95 ppb by weight, more preferably 0.005 to 90 ppb by weight, further preferably 0.008 to 85 ppb by weight, particularly preferably 0.01 to 80 ppb by weight,
4-ethylguaiacol; generally 0.002 to 9 ppb by weight, preferably 0.003 to 8 ppb by weight, more preferably 0.005 to 7 ppb by weight, further preferably 0.008 to 6 ppb by weight, particularly preferably 0.01 to 5 ppb by weight.

The concentration at the time of eating refers to the concentration at the time of eating after cooking. In the case of foods that are cooked according to the product instructions before eating such as processed foods, it is intended to refer to the concentration after cooking. When the concentration at the time of eating of the above-mentioned active ingredient is within the above-mentioned range, the oil-and-fat feel of foods and beverages can be enhanced.

The concept of the above-mentioned active ingredient compound contained in the oil-and-fat feel enhancer of the present invention includes those that have a structure that is in equilibrium with the compound in an aqueous solution and can be easily interconverted (e.g., tautomers, ionized forms, etc.), and also includes mixtures of the two.

The oil-and-fat feel enhancer of the present invention can be produced by a method known per se, by appropriately adding and mixing the active ingredients. The order and interval for adding the active ingredients are not particularly limited, and they can be set appropriately according to the purpose of use.

The oil-and-fat feel enhancer of the present invention can be produced by a method conventionally used in the field of food manufacturing, and the like, by adding only the active ingredients, or along with "other ingredients".

"Other components" are not particularly limited as long as they do not impair the effects of the present invention, and examples thereof include alcohols such as ethanol, glycerin, and propylene glycol, hydrocarbons, phenols, aldehydes, ketones, ethers, acids, lactones, esters, carboxylic acids, furan compounds, furanones, nitrogen-containing and sulfur-containing compounds; proteins, peptides; amino acids such as alanine, glutamic acid, glycine, and arginine, and salts thereof; organic acids such as acetic acid, citric acid, and tartaric acid, and salts thereof; inorganic salts such as salt, sodium chloride, and potassium chloride; dietary fiber such as resistant dextrin; sugars such as sugar, honey, maple syrup, sucrose, glucose, fructose, isomerized sugar, oligosaccharides, starch, dextrin, maltodextrin, and cyclodextrin; sugar alcohols such as xylitol and erythritol; high-intensity sweeteners; nucleic acids such as inosinic acid, guanylic acid, xanthylic acid, and salts thereof; pH buffers, excipients, bulking agents, flavorings, silicon dioxide, yeast cells, various powdered extracts, water, various animal and vegetable oils, solid fats, and extracts.

As the "other components", one kind of component may be used, or two or more kinds of components may be used in combination.

Also, in order to increase the effect of enhancing the oil-and-fat feel, alcohols, hydrocarbons, phenols, aldehydes, ketones, ethers, acids, lactones, esters, carboxylic acids, furan compounds, furanones, and nitrogen- and sulfur-containing compounds that are generally used in the fields of food and flavoring may be used in combination.

The form of the oil-and-fat feel enhancer of the present invention is not particularly limited, and a form that is easy to add to the above-mentioned foods and beverages, such as powder, granules, liquid, syrup, and jelly, can be mentioned. Formulation can be performed by conventional methods.

Another embodiment of the present invention is a method for producing a food or beverage containing fat or oil, including a step of adding at least one selected from the group consisting of 2,4,5-trimethylthiazole, 2,3,5-trimethylpyrazine, and 4-ethylguaiacol (sometimes to be abbreviated as the production method of the present invention).

In the production method of the present invention, the amount of 2,4,5-trimethylthiazole, 2,3,5-trimethylpyrazine, and 4-ethylguaiacol to be added to the foods and beverages containing fats and oils can be appropriately adjusted according to the target foods and beverages and the content and kind of fats and oils contained therein.

Specifically, the addition concentration with respect to the total weight of the foods and beverages containing fats and oils is as follows:
2,4,5-trimethylthiazole; generally 0.002 to 90 ppb by weight, preferably 0.003 to 80 ppb by weight, more preferably 0.005 to 70 ppb by weight, further preferably 0.008 to 60 ppb by weight, particularly preferably 0.01 to 50 ppb by weight,
2,3,5-trimethylpyrazine; generally 0.002 to 98 ppb by weight, preferably 0.003 to 95 ppb by weight, more preferably 0.005 to 90 ppb by weight, further preferably 0.008 to 85 ppb by weight, particularly preferably 0.01 to 80 ppb by weight,
4-ethylguaiacol; generally 0.002 to 9 ppb by weight, preferably 0.003 to 8 ppb by weight, more preferably 0.005 to 7 ppb by weight, further preferably 0.008 to 6 ppb by weight, particularly preferably 0.01 to 5 ppb by weight.

Within the above-mentioned range, the oil-and-fat feel enhancing effect can be obtained efficiently. Furthermore, within the above-mentioned range, the oil-and-fat feel enhancing effect can be obtained without imparting an off-flavor.

In the present invention, the "off-flavor" refers to a strange taste or aroma that is not normally felt in foods and beverages containing fats and oils, and in some cases, an unpleasant taste or aroma. Specific examples of off-flavors include a chemical odor, a putrid odor, a deteriorated odor, and the odor of a flavoring that is not found in fats and oils-containing foods. Furthermore, "no off-flavor" means that no off-flavor is felt, or that even if there is an off-flavor, it is not generally unpleasant.

More specifically, when the content of fats and oils in a food or beverage is generally 0.001% by weight or more, preferably 0.01% by weight or more, more preferably 0.1% by weight or more, and generally less than 100% by weight, specifically, when it is generally 0.001% by weight or more and less than 100% by weight, preferably 0.01 to 80% by weight, more preferably 0.1 to 60% by weight, further preferably 0.4 to 40% by weight, particularly preferably 1 to 20% by weight, most preferably 2 to 10% by weight, the oil-and-fat feel enhancer of the present invention is added to the food or beverage such that the concentration of the enhancer is as follows, with respect to the total weight of the foods and beverages:
2,4,5-trimethylthiazole; generally 0.002 to 90 ppb by weight, preferably 0.003 to 80 ppb by weight, more preferably 0.005 to 70 ppb by weight, further preferably 0.008 to 60 ppb by weight, particularly preferably 0.01 to 50 ppb by weight,
2,3,5-trimethylpyrazine; generally 0.002 to 98 ppb by weight, preferably 0.003 to 95 ppb by weight, more preferably 0.005 to 90 ppb by weight, further preferably 0.008 to 85 ppb by weight, particularly preferably 0.01 to 80 ppb by weight,
4-ethylguaiacol; 0.002 to 9 ppb by weight, preferably 0.003 to 8 ppb by weight, more preferably 0.005 to 7 ppb by weight, further preferably 0.008 to 6 ppb by weight, particularly preferably 0.01 to 5 ppb by weight.

In the production method of the present invention, the ratio of 2,4,5-trimethylthiazole, 2,3,5-trimethylpyrazine, and 4-ethylguaiacol to be added to fats and oils in foods and beverages can be appropriately adjusted according to the kind of fats and oils and the content of fats and oils in foods and beverages.

Specifically, the following can be added with respect to 100 parts by weight of fats and oils in foods and beverages:
2,4,5-trimethylthiazole; generally 0.3×10⁻⁷ to 13×10⁻⁹ parts by weight, preferably 0.5×10⁻⁷ to 11×10⁻⁴ parts by weight, more preferably 0.8×10⁻⁷ to 10×10⁻⁴ parts by weight, further preferably 1×10⁻⁷ to 8×10⁻⁴ parts by weight, particularly preferably 1.4×10⁻⁷ to 7×10⁻⁴ parts by weight,
2,3,5-trimethylpyrazine; generally 0.3×10⁻⁷ to 13×10⁻⁴ parts by weight, preferably 0.5×10⁻⁷ to 13×10⁻⁴ parts by weight, more preferably 0.8×10⁻⁷ to 12.5×10⁻⁴ parts by weight, further preferably 1×10⁻⁷ to 12×10⁻⁴ parts by weight, particularly preferably 1.4×10⁻⁷ to 11.2×10⁻⁴ parts by weight,
4-ethylguaiacol; generally 0.3×10⁻⁷ to 13×10⁻⁵ parts by weight, preferably 0.5×10⁻⁷ to 11×10⁻⁵ parts by weight, more preferably 0.8×10⁻⁷ to 10×10⁻⁵ parts by weight, further preferably 1×10⁻⁷ to 8×10⁻⁵ parts by weight, particularly preferably 1.4×10⁻⁷ to 7×10⁻⁵ parts by weight.

In another embodiment, the following can be added with respect to 100 parts by weight of fats and oils in foods and beverages containing high concentrations of fats and oils:
2,4,5-trimethylthiazole; generally 0.3×10⁻⁹ to 13×10⁻⁴ parts by weight, preferably 0.5×10⁻⁹ to 11×10⁻⁴ parts by weight, more preferably 0.8×10⁻⁹ to 10×10⁻⁴ parts by weight, further preferably 1×10⁻⁹ to 8×10⁻⁴ parts by weight, particularly preferably 1.4×10⁻⁹ to 7×10⁻⁴ parts by weight,
2,3,5-trimethylpyrazine; generally 0.3×10⁻⁹ to 13×10⁻⁴ parts by weight, preferably 0.5×10⁻⁹ to 13×10⁻⁴ parts by weight, more preferably 0.8×10⁻⁹ to 12.5×10⁻⁴ parts by weight, further preferably 1×10⁻⁹ to 12×10⁻⁴ parts by weight, particularly preferably 1.4×10⁻⁹ to 11.2×10⁻⁴ parts by weight,
4-ethylguaiacol; generally 0.3×10⁻⁹ to 13×10⁻⁵ parts by weight, preferably 0.5×10⁻⁹ to 11×10⁻⁵ parts by weight, more preferably 0.8×10⁻⁹ to 10×10⁻⁵ parts by weight, further preferably 1×10⁻⁹ to 8×10⁻⁵ parts by weight, particularly preferably 1.4×10⁻⁹ to 7×10⁻⁵ parts by weight.

In the production method of the present invention, the fats and oils-containing foods and beverages are not particularly limited as long as they contain fats and oils.

Specifically, the fats and oils contained in the fats and oils-containing foods and beverages in the production method of the present invention can be set appropriately according to the kind of foods and beverages and fats and oils. The concentration of the fats and oils is generally 0.001% by weight or more, preferably 0.01% by weight or more, more preferably 0.1% by weight or more, and generally less than 100% by weight. Specifically, the content of fats and oils in the fats and oils-containing foods and beverages is generally 0.001% by weight or more and less than 100% by weight, preferably 0.01 to 80% by weight, more preferably 0.1 to 60% by weight, further preferably 0.4 to 40% by weight, particularly preferably 1 to 20% by weight, most preferably 2 to 10% by weight, with respect to the total amount of the foods and beverages. Specific examples of the foods and beverages are as described above.

In the production method of the present invention, the method and conditions for adding and mixing 2,4,5-trimethylthiazole, 2,3,5-trimethylpyrazine, and 4-ethylguaiacol to foods and beverages containing fats and oils are not particularly limited, and can be appropriately set according to the kind and form of the foods and beverages. In the present invention, 2,4,5-trimethylthiazole, 2,3,5-trimethylpyrazine, and 4-ethylguaiacol may be mixed together and then added to the product, or 2,4,5-trimethylthiazole, 2,3,5-trimethylpyrazine, and 4-ethylguaiacol may be added individually to the product.

In the present invention, 2,4,5-trimethylthiazole, 2,3,5-trimethylpyrazine, and 4-ethylguaiacol may be added not only during the production of foods and beverages, but also after the production of the food or beverage products.

The kinds, combinations, weight ratios, and the like of the flavoring components to be added are all as described above, and the order and intervals of the flavoring components to be added are not particularly limited.

The foods and beverages containing fats and oils produced by the production method of the present invention are also another embodiment of the present invention (also referred to as the foods and beverages of the present invention). That is, the foods and beverages of the present invention are foods and beverages containing fats and oils that contain at least one selected from the group consisting of 2,4,5-trimethylthiazole, 2,3,5-trimethylpyrazine, and 4-ethylguaiacol, and contain fats and oils, 2,4,5-trimethylthiazole, 2,3,5-trimethylpyrazine, and 4-ethylguaiacol at the below-mentioned concentrations.

The foods and beverages of the present invention are foods and beverages that can be prepared to have the above-mentioned concentrations at the time of eating, or contains fats and oils, 2,4,5-trimethylthiazole, 2,3,5-trimethylpyrazine, and 4-ethylguaiacol at the above-mentioned concentrations at the time of eating, and are foods and beverages with an enhanced oil-and-fat feel. Furthermore, the foods and beverages of the present invention are foods and beverages with an enhanced oil-and-fat feel but without an off-flavor.

When 2,4,5-trimethylthiazole, 2,3,5-trimethylpyrazine, and 4-ethylguaiacol of the present invention are contained in foods and beverages containing fats and oils, the contents of the fats and oils and 2,4,5-trimethylthiazole, 2,3,5-trimethylpyrazine, and 4-ethylguaiacol can be appropriately determined according to the kinds of foods and beverages. For example, they are contained in the following concentrations with respect to the total weight of the foods and beverages containing fats and oils:
fats and oils; generally 0.001% by weight or more, preferably 0.01% by weight or more, more preferably 0.1% by weight or more, generally less than 100% by weight,
2,4,5-trimethylthiazole; generally 0.002 to 90 ppb by weight, preferably 0.003 to 80 ppb by weight, more preferably 0.005 to 70 ppb by weight, further preferably 0.008 to 60 ppb by weight, particularly preferably 0.01 to 50 ppb by weight,
2,3,5-trimethylpyrazine; generally 0.002 to 98 ppb by weight, preferably 0.003 to 95 ppb by weight, more preferably 0.005 to 90 ppb by weight, further preferably 0.008 to 85 ppb by weight, particularly preferably 0.01 to 80 ppb by weight,
4-ethylguaiacol; 0.002 to 9 ppb by weight, preferably 0.003 to 8 ppb by weight, more preferably 0.005 to 7 ppb by weight, further preferably 0.008 to 6 ppb by weight, particularly preferably 0.01 to 5 ppb by weight.

The contents of the above-mentioned 2,4,5-trimethylthiazole, 2,3,5-trimethylpyrazine, and 4-ethylguaiacol in the foods and beverages can be measured by a method known per se. For example, they can be measured by a headspace analysis method such as the SPME (Solid Phase Micro Extraction) method using a gas chromatograph-mass spectrometer, or a direct injection method such as solvent extraction. In addition, it is also possible to subject the extracted components to a pretreatment such as concentration, as necessary.

Specifically, for example, 5 ml of the measurement sample is tightly sealed in a 20 ml vial and heated to 50°C while exposing an SPME fiber (50/30 µm, DVB/CAR/PDMS 57298-U: Gray) to the headspace for 60 min to adsorb and concentrate the components, and then the components are introduced into a gas chromatograph for measurement.

Another embodiment of the present invention is a method for enhancing an oil-and-fat feel of a food or beverage containing fat or oil, including adding at least one selected from the group consisting of 2,4,5-trimethylthiazole, 2,3,5-trimethylpyrazine, and 4-ethylguaiacol (sometimes to be abbreviated as the enhancing method of the present invention).

In the enhancing method of the present invention, the amount of fats and oils in foods and beverages, the amount of each compound to be added, the weight ratio of the compounds, the kind of fats and oils and the foods and beverages containing fats and oils, the definitions and preferred ranges, and the like are as described above.

### [Example]

The present invention is described in more detail below with reference to Examples; however, the scope of the present invention is not limited by these examples. In the present specification, "%" and "ppb" mean "% by weight" and "ppb by weight", respectively, unless otherwise specified.

### (Sample preparation method)

Test samples were prepared using the following compounds. 2,4,5-trimethylthiazole: manufactured by Sigma-Aldrich 2,3,5-trimethylpyrazine: manufactured by Sigma-Aldrich 4-ethylguaiacol: manufactured by Sigma-Aldrich

### <Example 1>

### 1. Preparation of test sample

Pork soup (fat and oil content 0.71%; pork extract powder 2.5%, salt 0.3%) was used as the negative control (NC), and pork soup (fat and oil content 1.71%; pork extract powder 2.5%, salt 0.3%, lard 1%) was used as the positive control (PC). Test samples were prepared by adding each component to the aforementioned NC such that the concentration of each component in the food was as shown in Table 1. The obtained test samples were evaluated according to the following sensory evaluation method.

### 2. Sensory evaluation method

Sensory evaluation was performed on the strength of the oil-and-fat feel and the presence or absence of an off-flavor of the test samples. The oil-and-fat feel was evaluated by a panel of three experts who ate PC, NC, test samples (test plots 1-45), scored the test samples in 0.0 to 10.0 points in increments of 0.1 point, with PC being "10.0 points" and NC being "1.0 point" (non-blind), and then averaged the points obtained by the three experts. For foods that do not contain any fat or oil, no sense of oil-and-fat feel is given a point of 0. The evaluation of off-flavors was performed by a panel of three experts who tasted the test samples and judged by consensus (non-blind) whether off-flavors (tastes and aromas (e.g., chemical odors) not present in NC or PC) were present. The results are shown in Table 1.

**[Table 1]**

| component number | test plot | 2,4,5-trimethylthiazole (ppb) | 2,3,5-trimethylpyrazine (ppb) | 4-ethylguaiacol (ppb) | strength of oil-and-fat feel | off-flavor (-/+) |
|---|---|---|---|---|---|---|
| PC | | 0 | 0 | 0 | 10.0 | - |
| NC | | 0 | 0 | 0 | 1.0 | - |
| single component | test plot 1 | 0.001 | 0 | 0 | 1.3 | - |
| | test plot 2 | 0.01 | 0 | 0 | 2.0 | - |
| | test plot 3 | 0.1 | 0 | 0 | 2.5 | - |
| | test plot 4 | 1 | 0 | 0 | 3.8 | - |
| | test plot 5 | 10 | 0 | 0 | 4.5 | - |
| | test plot 6 | 20 | 0 | 0 | 4.7 | - |
| | test plot 7 | 50 | 0 | 0 | 4.8 | - |
| | test plot 8 | 100 | 0 | 0 | 4.2 | + |
| | test plot 9 | 0 | 0.001 | 0 | 1.4 | - |
| | test plot 10 | 0 | 0.01 | 0 | 2.1 | - |
| | test plot 11 | 0 | 0.1 | 0 | 2.8 | - |
| | test plot 12 | 0 | 1 | 0 | 3.5 | - |
| | test plot 13 | 0 | 10 | 0 | 4.7 | - |
| | test plot 14 | 0 | 20 | 0 | 5.0 | - |
| | test plot 15 | 0 | 50 | 0 | 5.2 | - |
| | test plot 16 | 0 | 80 | 0 | 5.4 | - |
| | test plot 17 | 0 | 100 | 0 | 5.3 | + |
| | test plot 18 | 0 | 0 | 0.001 | 1.4 | - |
| | test plot 19 | 0 | 0 | 0.01 | 2.1 | - |
| | test plot 20 | 0 | 0 | 0.1 | 2.6 | - |
| | test plot 21 | 0 | 0 | 1 | 3.8 | - |
| | test plot 22 | 0 | 0 | 2 | 3.9 | - |
| | test plot 23 | 0 | 0 | 5 | 4.1 | - |
| | test plot 24 | 0 | 0 | 10 | 3.9 | + |
| | test plot 25 | 0 | 0 | 100 | 3.1 | + |
| 2 components | test plot 26 | 0.01 | 0.01 | 0 | 3.2 | - |
| | test plot 27 | 0.01 | 0 | 0.01 | 3.4 | - |
| | test plot 28 | 0.01 | 0.1 | 0 | 4.7 | - |
| | test plot 29 | 0.01 | 0 | 0.1 | 4.5 | - |
| | test plot 30 | 0.1 | 0.01 | 0 | 4.6 | - |
| | test plot 31 | 0.1 | 0 | 0.01 | 4.6 | - |
| | test plot 32 | 0.1 | 0.1 | 0 | 4.8 | - |
| | test plot 33 | 0.1 | 0 | 0.1 | 5.1 | - |
| | test plot 34 | 0 | 0.01 | 0.01 | 4.8 | - |
| | test plot 35 | 0 | 0.01 | 0.1 | 5.1 | - |
| | test plot 36 | 0 | 0.1 | 0.01 | 5.4 | - |
| | test plot 37 | 0 | 0.1 | 0.1 | 6.3 | - |
| 3 components | test plot 38 | 0.01 | 0.01 | 0.01 | 5.0 | - |
| | test plot 39 | 0.01 | 0.01 | 0.1 | 5.5 | - |
| | test plot 40 | 0.01 | 0.1 | 0.01 | 5.7 | - |
| | test plot 41 | 0.01 | 0.1 | 0.1 | 6.6 | - |
| | test plot 42 | 0.1 | 0.01 | 0.01 | 6.8 | - |
| | test plot 43 | 0.1 | 0.01 | 0.1 | 6.8 | - |
| | test plot 44 | 0.1 | 0.1 | 0.01 | 6.9 | - |
| | test plot 45 | 0.1 | 0.1 | 0.1 | 7.2 | - |

As is clear from the results in Table 1, the oil-and-fat feel was effectively enhanced in all of the samples of test plots 2 to 8, 10 to 17, and 19 to 45 of the present invention, to which at least one compound selected from the group consisting of 2,4,5-trimethylthiazole, 2,3,5-trimethylpyrazine, and 4-ethylguaiacol was added. No off-flavor was confirmed in any of the samples of test plots 2 to 7, 10 to 16, 19 to 23, and 26 to 45.

These results confirmed that the oil-and-fat feel can be effectively enhanced by adding at least one compound selected from the group consisting of 2,4,5-trimethylthiazole, 2,3,5-trimethylpyrazine, and 4-ethylguaiacol to foods.

### <Example 2>

### 1. Preparation of test sample

Coffee beverage containing low-fat instant creaming powder (fats and oils content 0.47%; low-fat creaming powder 3.2%, granulated sugar 1.5%, instant coffee 0.7%) was used as the negative control (NC), and coffee beverage containing high-fat instant creaming powder (fats and oils content 1.01%; high-fat creaming powder 3.2%, granulated sugar 1.5%, instant coffee 0.7%) was used as the positive control (PC). Test samples were prepared by adding each component to the aforementioned NC such that the concentration of each component in the beverage was as shown in Table 2. The obtained test samples were evaluated according to the following sensory evaluation method.

### 2. Sensory evaluation method

Sensory evaluation was performed on the strength of the oil-and-fat feel and the presence or absence of an off-flavor of the evaluation samples. The oil-and-fat feel was evaluated by a panel of three experts who ate PC, NC, test samples (test plots 46-52), scored the evaluation samples in 0.0 to 10.0 points in increments of 0.1 point, with PC being "10.0 points" and NC being "1.0 point" (non-blind), and then averaged the points obtained by the three experts. For beverages that do not contain any fat or oil, no sense of oil-and-fat feel is given a point of 0. The evaluation of off-flavors was performed by a panel of three experts who tasted each coffee beverage as the evaluation sample and judged by consensus (non-blind) whether off-flavors (tastes and aromas (e.g., chemical odors) not present in NC or PC) were present. The results are shown in Table 2.

**[Table 2]**

| component number | test plot | 2,4,5-trimethylthiazole (ppb) | 2,3,5-trimethylpyrazine (ppb) | 4-ethylguaiacol (ppb) | strength of oil-and-fat feel | off-flavor (-/+) |
|---|---|---|---|---|---|---|
| PC | | 0 | 0 | 0 | 10.0 | - |
| NC | | 0 | 0 | 0 | 1.0 | - |
| single component | test plot 46 | 0.001 | 0 | 0 | 2.0 | - |
| | test plot 47 | 0 | 0.01 | 0 | 2.3 | - |
| | test plot 48 | 0 | 0 | 0.01 | 2.3 | - |
| 2 components | test plot 49 | 0.01 | 0.01 | 0 | 3.7 | - |
| | test plot 50 | 0.01 | 0 | 0.01 | 3.8 | - |
| | test plot 51 | 0 | 0.01 | 0.01 | 4.0 | - |
| 3 components | test plot 52 | 0.01 | 0.01 | 0.01 | 4.7 | - |

As is clear from the results in Table 2, the oil-and-fat feel was effectively enhanced in all of the samples of test plots 46 to 52 of the present invention, to which at least one compound selected from the group consisting of 2,4,5-trimethylthiazole, 2,3,5-trimethylpyrazine, and 4-ethylguaiacol was added. No off-flavor was confirmed in any of the samples of test plots 46 to 52.

These results confirmed that the oil-and-fat feel can be effectively enhanced by adding at least one compound selected from the group consisting of 2,4,5-trimethylthiazole, 2,3,5-trimethylpyrazine, and 4-ethylguaiacol to foods.

The food materials used were as follows:
Pork extract powder A6420; Nikken Foods Co., Ltd.
Pure lard; Megmilk Snow Brand Co., Ltd.
Blendy (registered trademark); Ajinomoto AGF Co., Ltd.
Marim (registered trademark); Ajinomoto AGF Co., Ltd.
Marim (registered trademark) low fat type; Ajinomoto AGF Co., Ltd.

### [Industrial Applicability]

According to the present invention, a composition that can effectively and economically enhance the oil-and-fat feel in foods and beverages is provided. Therefore, the present invention is particularly useful in the field of products that contain fats and oils.

This application is based on a patent application No. 2022-142716 filed in Japan, the contents of which are encompassed in full herein.

## Claims

1. An oil-and-fat feel enhancer comprising at least one selected from the group consisting of (1) 2,4,5-trimethylthiazole, (2) 2,3,5-trimethylpyrazine, and (3) 4-ethylguaiacol as an active ingredient.

2. The oil-and-fat feel enhancer according to claim 1, comprising at least two selected from the group consisting of (1) 2,4,5-trimethylthiazole, (2) 2,3,5-trimethylpyrazine, and (3) 4-ethylguaiacol as active ingredients.

3. The oil-and-fat feel enhancer according to claim 1, comprising (1) 2,4,5-trimethylthiazole, (2) 2,3,5-trimethylpyrazine, and (3) 4-ethylguaiacol as active ingredients.

4. The oil-and-fat feel enhancer according to claim 1, which is added to foods and beverages containing fats and oils.

5. The oil-and-fat feel enhancer according to claim 1, which is added such that the concentrations of the active ingredients are (1) 0.002 to 90 ppb by weight, (2) 0.002 to 98 ppb by weight, and (3) 0.002 to 9 ppb by weight, at the time of eating.

6. A method for producing a food or beverage comprising fat or oil, comprising a step of adding at least one selected from the group consisting of (1) 2,4,5-trimethylthiazole, (2) 2,3,5-trimethylpyrazine, and (3) 4-ethylguaiacol at an addition concentration of (1) 0.002 to 90 ppb by weight, (2) 0.002 to 98 ppb by weight, and (3) 0.002 to 9 ppb by weight, respectively, with respect to the total weight of the food and beverage.

7. The production method according to claim 6, comprising a step of adding at least two selected from the group consisting of (1) 2,4,5-trimethylthiazole, (2) 2,3,5-trimethylpyrazine, and (3) 4-ethylguaiacol.

8. The production method according to claim 6, comprising a step of adding (1) 2,4,5-trimethylthiazole, (2) 2,3,5-trimethylpyrazine, and (3) 4-ethylguaiacol.

9. The production method according to claim 6, wherein the food or beverage comprising fat or oil is a food or beverage with an enhanced oil-and-fat feel.

10. A method for enhancing an oil-and-fat feel of a food or beverage comprising fat or oil, comprising adding at least one selected from the group consisting of (1) 2,4,5-trimethylthiazole, (2) 2,3,5-trimethylpyrazine, and (3) 4-ethylguaiacol.

11. The method according to claim 10, comprising a step of adding at least two selected from the group consisting of (1) 2,4,5-trimethylthiazole, (2) 2,3,5-trimethylpyrazine, and (3) 4-ethylguaiacol.

12. The method according to claim 10, comprising a step of adding (1) 2,4,5-trimethylthiazole, (2) 2,3,5-trimethylpyrazine, and (3) 4-ethylguaiacol.

13. The method according to claim 10, wherein the addition concentrations are (1) 0.002 to 90 ppb by weight, (2) 0.002 to 98 ppb by weight, and (3) 0.002 to 9 ppb by weight, respectively, with respect to the total weight of the food and beverage.

14. A food or beverage comprising fat or oil, comprising at least one selected from the group consisting of (1) 2,4,5-trimethylthiazole, (2) 2,3,5-trimethylpyrazine, and (3) 4-ethylguaiacol, wherein contents thereof are 0.001% by weight or more and less than 100% by weight for the fat or oil, 0.002 to 90 ppb by weight for (1), 0.002 to 98 ppb by weight for (2), and 0.002 to 9 ppb by weight for (3), each with respect to the total weight of the food and beverage.

15. The food or beverage according to claim 14, comprising at least two selected from the group consisting of (1) 2,4,5-trimethylthiazole, (2) 2,3,5-trimethylpyrazine, and (3) 4-ethylguaiacol.

16. The food or beverage according to claim 14, comprising (1) 2,4,5-trimethylthiazole, (2) 2,3,5-trimethylpyrazine, and (3) 4-ethylguaiacol.
